# EUROPEAN PATENT APPLICATION

(11) **EP 4 032 782 A1**
(43) Date of publication of application: **27.07.2022**
(21) Application number: 20864310.6
(22) Date of filing: 16.04.2020
(51) Int. Cl.: B61L 23/00, B60L 3/00, H04N 7/18

(54) **TRAIN CONTROL SYSTEM**

(30) Priority: 17.09.2019 JP 2019168111
(71) Applicant: Hitachi, Ltd., Tokyo 100-8280 (JP)
(72) Inventor: OOMI, Taishi, Tokyo 100-8280 (JP); SASAKI, Eiji, Tokyo 100-8280 (JP); IMAMOTO, Kenji, Tokyo 100-8280 (JP); KOIKE, Jun, Tokyo 100-8280 (JP)
(74) Representative: MERH-IP Matias Erny Reichl Hoffmann Patentanwälte PartG mbB
(86) International application number: PCT/JP2020/016712
(87) International publication number: WO 2021/053866

(57) **Abstract**

Provided is a technique for transmitting and displaying a camera video and a position (position ID) of a monitoring camera that captures an image of an obstacle or a hindrance to an on-board side when it can be detected that there is the obstacle or the hindrance on a ground side based on a camera video or sensor data obtained by a monitoring camera or a sensor installed around a track railway on which a train travels, particularly, installed in a place that cannot be seen by an operator.

A ground device collects a camera video (image) of a monitoring camera installed in a place (curve, platform, railroad crossing, and the like) with poor visibility and transmits the collected camera video (image) to an on-board device along with position information (position ID). The on-board device receives and displays the camera video and the position information, which are transmitted by the ground device.

## Description

### Technical Field

The present invention relates to a train control system.

### Background Art

In the related art, as a technique for supporting an operation of a train, for example, there is a technique disclosed in JP 2017-87978 A (PTL 1). This publication discloses an invention that supports the operation of a train by reducing the burden on an operator particularly when the train passes through a railroad crossing by "a train operation support system including: an on-board device mounted on a train traveling on a track; an image pickup device that picks up an image of an inside of a railroad crossing provided on the track and generates image information; a ground device that wirelessly transmits the image information or information based on the image information to the on-board device as in-railroad crossing information; and a display device that is provided in a cab of the train and displays the in-railroad crossing information received from the ground device by the on-board device when the train reaches a predetermined position before the railroad crossing".

### Citation List

### Patent Literature

PTL 1: JP 2017-87978 A

### Summary of Invention

### Technical Problem

In PTL 1, when the train reaches a position before the railroad crossing, the ground device collects in-railroad crossing information (image) captured by the image pickup device. Then, the collected in-railroad crossing information is transmitted from the ground device to the on-board device and displayed on the display device of the on-board device, so that the operator can check the situation in the railroad crossing by this display. However, in PTL 1, it is not assumed that, when an obstacle that obstructs traveling of the train or a failure of various devices on a vehicle is detected from the image captured by the image pickup device, the remote control of the train from the ground is centrally managed in accordance with the presence or absence of the obstacle or a hindrance. Therefore, the invention in PTL 1 has only an effect that an operator can display and check the in-railroad crossing information (image) on the vehicle.

In addition, in the related art, the fact is that, when the train passes through a place where the operator cannot see, the operator sounds a horn or the like to inform the surroundings of the passage of the train. Even if the operator can display and check the situation in the railroad crossing with an image, it is difficult for the operator to reliably detect the presence or absence of the obstacle or hindrance only with the image information. Furthermore, means for giving information to the operator is not considered for a situation in a place such as a curve with poor visibility other than a railroad crossing and a station platform.

Therefore, an object of the present invention is to provide a technique capable of displaying and checking an image and position information of a monitoring camera on an on-board side in a manner that the monitoring camera and a sensor (such as a millimeter wave or a LIDAR) is installed around a railway track on which a train travels, particularly at a place where an operator cannot see, for example, a curve, a railroad crossing, a station platform, or the like, so as to detect an obstacle or a hindrance on a ground side based on a camera video (or a camera image) obtained by the monitoring camera or the sensor, and, when an obstacle or a hindrance can be detected, the camera video (or an obstruction detection result) and a position (equipment ID) of the monitoring camera that captures an image of the obstacle or the hindrance are transmitted to the on-board side.

### Solution to Problem

In order to achieve the above object, one of the representative train control systems of the present invention is a train control system including: a monitoring camera that is installed on a ground and/or on a vehicle and captures an image around a track on which a train travels or on a railway; a ground device; and an on-board device.

The ground device includes
an obstacle detection device that collects a camera video captured by the monitoring camera and detects presence or absence of an obstacle based on the collected camera video, and
a ground wireless device that, when the obstacle detection device detects the obstacle, transmits at least any information of the camera video of the monitoring camera that detects the obstacle and an obstacle detection result, and position information indicating a place of the monitoring camera that detects the obstacle, to the on-board device.

The on-board device includes an on-board wireless device that receives at least the any information of the camera video and the obstacle detection result, and the position information of the monitoring camera that detects the obstacle, which are transmitted from the ground wireless device of the ground device, and
a monitoring device that displays at least the any information of the camera video and the obstacle detection result, and the position information indicating an obstruction occurrence place, which are received by the on-board wireless device.

The monitoring device is enabled to check a field situation before the train approaches the obstruction/hindrance occurrence place.

When there is another train (vehicle) close to the train (vehicle) in accordance with the train (vehicle) and the position information, the ground device further transmits a monitoring camera video and the position information to an on-board device of the close other train (vehicle) to call attention to a following train and an oncoming train.

In order to achieve the above object, another of the representative train control systems of the present invention is a train control system including: a monitoring camera that is installed on a ground and/or on a vehicle and captures an image around a track on which a train travels or on a railway; a ground device; and an on-board device.

The ground device includes
a ground wireless device that transmits, to the on-board device, a camera video captured by a monitoring camera and position information indicating a place of the monitoring camera.

The on-board device includes
an on-board wireless device that receives the camera video transmitted from the ground wireless device of the ground device and the position information of the monitoring camera that detects an obstacle,
an obstacle detection device that detects presence or absence of the obstacle based on the camera video transmitted from the ground wireless device of the ground device, and
a monitoring device that, when the obstacle detection device detects the obstacle, displays at least any information of the camera video used to detect the obstacle and an obstacle detection result, and the position information indicating the place of the monitoring camera, which is transmitted from the ground wireless device.

The monitoring device is enabled to check a field situation before the train approaches an obstruction/hindrance occurrence place.

### Advantageous Effects of Invention

According to the present invention, it is possible to provide information regarding an obstacle on the ground side to an operator on the vehicle.

For example, in the case of an operator or the like on the train side, it is possible to accurately and quickly check, on traveling of the train, entry and stay of an object that obstructs or hinders the train on the ground side, for example, a person, a car, an animal, and the like after crossing is blocked, a railroad crossing barrier (taking a signal directly from a railroad crossing, a lighting status of a special signal light emitter, or the like), an emergency push button status (taking a signal directly from a button, or a lighting status of a special signal light emitter, or the like), a fall at a station platform, wobble, congestion at a station platform, or the like, and it is possible to perform safer operation management.

Objects, configurations, and advantageous effects other than those described above will be clarified by the descriptions of the following embodiments.

### Brief Description of Drawings

[FIG. 1] FIG. 1 is a block diagram illustrating a schematic configuration of Embodiment 1 in a train control system of the present invention.
[FIG. 2] FIG. 2 is a block diagram illustrating a configuration example of an on-board control system in an on-board device in Embodiment 1.
[FIG. 3] FIG. 3 is a block diagram illustrating a configuration example of a ground control system in a ground device in Embodiment 1.
[FIG. 4] FIG. 4 is a flowchart for describing a processing procedure for notifying an on-board side of an obstruction occurrence situation including an obstruction occurrence detection result and an obstruction occurrence place when the obstruction occurrence is detected on the ground side in the train control system in Embodiment 1.
[FIG. 5] FIG. 5 is a block diagram illustrating a configuration example of an on-board control system in Embodiment 2 in the train control system of the present invention.
[FIG. 6] FIG. 6 is a block diagram illustrating a configuration example of a ground control system in a ground device in Embodiment 2.
[FIG. 7] FIG. 7 is a flowchart for explaining a processing procedure of detecting and displaying an occurrence of an obstruction on the on-board side in the train control system in Embodiment 2.

### Description of Embodiments

Hereinafter, embodiments of the present invention will be described with reference to the drawings.

First, in the following embodiments, a case where an obstruction or a hindrance occurring on the ground side is detected refers to a case where a railroad crossing on a track, a station platform around the track, or an operator has no visibility, that is, a case where an obstacle or an obstacle is detected by a monitoring camera or a sensor installed in a place where visibility is poor on the railway, for example, a curve of the track, a station platform, or the like. Detection of the occurrence of an obstruction or a hindrance may be performed on the ground side or on the vehicle upper side.

An example in which an obstacle at a railroad crossing is captured by a monitoring camera will be described below.

### [Embodiment 1]

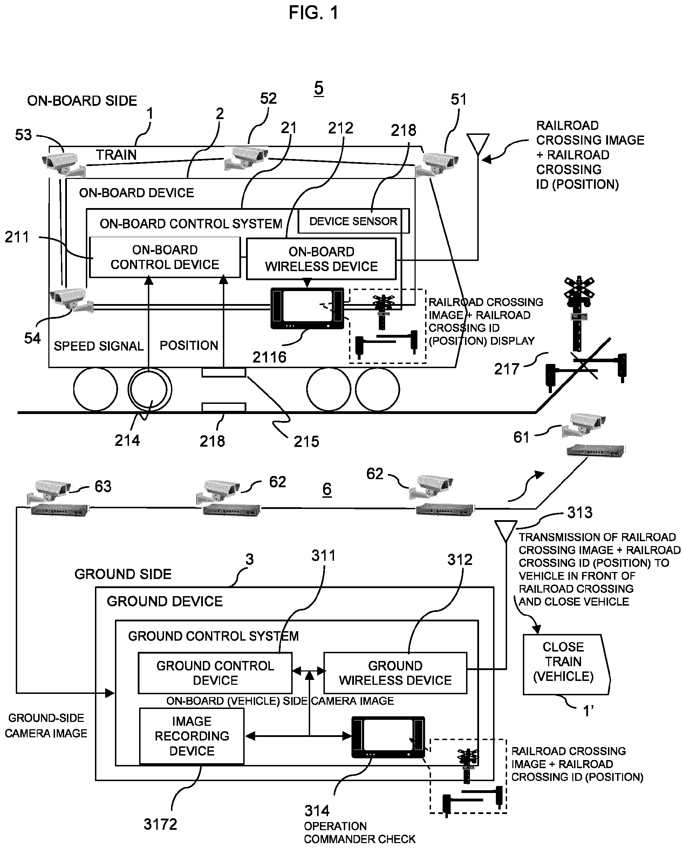

FIG. 1 is a block diagram illustrating a schematic configuration of a train control system of the present invention.

The train control system includes an on-board device 2 mounted on a train 1 and a ground device 3 installed on the ground.

The on-board device 2 includes an on-board control system 21. The on-board control system 21 includes an on-board control device 211, an on-board wireless device 212, an on-board monitoring device 5 attached to the train 1 (vehicle), and a monitoring device. 2116 installed in an operator seat 2117. The on-board monitoring camera 5 and a device sensor 218 are provided at necessary locations outside and inside the train 1 (vehicle).

The on-board monitoring device 5 includes a monitoring camera, the device sensor 218, and the like.

The monitoring cameras include, for example, a front camera 51 that captures an image of the front of the train 1 traveling on a track 216, a rear camera 53 that captures an image of the rear of the train 1, a side camera 54 that captures an image of the periphery and sides of the train 1, a pantograph camera 52 that captures an image of the pantograph, and an in-vehicle camera 55 that captures an image of a door and the inside of the train 1 (vehicle).

The device sensor 218 includes, for example, an overhead line inspection sensor, a railway device inspection sensor, a track inspection sensor, and the like.

The on-board control device 211 controls the on-board device 2 in response to a speed signal from the speed generator 214, a position signal from the on-board element 215, and the like.

The on-board wireless device 212 is a device that wirelessly communicates data with the ground wireless device 312, and wirelessly transmits, for example, a camera video (a railroad crossing image and a railroad crossing position) captured by a monitoring camera of the on-board monitoring device 5 and sensor data detected by the device sensor 218 from the antenna 213 to the ground wireless device 312 of the ground device 3.

The monitoring device 2116 displays a camera video (a railroad crossing image and a railroad crossing position) and sensor data obtained by capturing an image of the occurrence of an obstruction at a railroad crossing with a camera. Thus, a passenger such as the operator or the conductor can detect the obstruction occurrence situation on the ground side.

The ground device 3 includes a ground control system 31. The ground control system 31 includes a ground control device 311, a ground wireless device 312, a monitoring device 314, an operation command device 320, and the like.

The ground control device 311 receives, for example, a camera image of the ground monitoring camera 6 installed on the ground side and sensor data of the device sensor 218 on the vehicle side, and outputs the camera image and the data to the ground wireless device 312 and the monitoring device 314.

The monitoring camera of the ground monitoring device 6 includes, for example, a railway camera 62 that captures an image of a railway of the track 216, a railroad crossing camera 61 that captures an image of a railroad crossing, a home camera 63 that captures an image of a platform, and the like.

The ground wireless device 312 wirelessly transmits a camera video (a railroad crossing image and a railroad crossing position) captured by the monitoring camera of the ground monitoring device 6 and sensor data detected by the device sensor 218 from the antenna 313 to the on-board wireless device 212 of the on-board device 2.

The monitoring device 314 displays a camera video (a railroad crossing image and a railroad crossing position) captured by the monitoring camera of the ground monitoring device 6 and/or a camera video (a railroad crossing image and a railroad crossing position) captured by the monitoring camera of the on-board monitoring device 5 and sensor data detected by the various device sensors 218. Thus, an operation commander in the operation command station can check the obstruction occurrence situation on the ground side, that is, the presence or absence of an obstacle or a hindrance, and can issue an operation command according to the result.

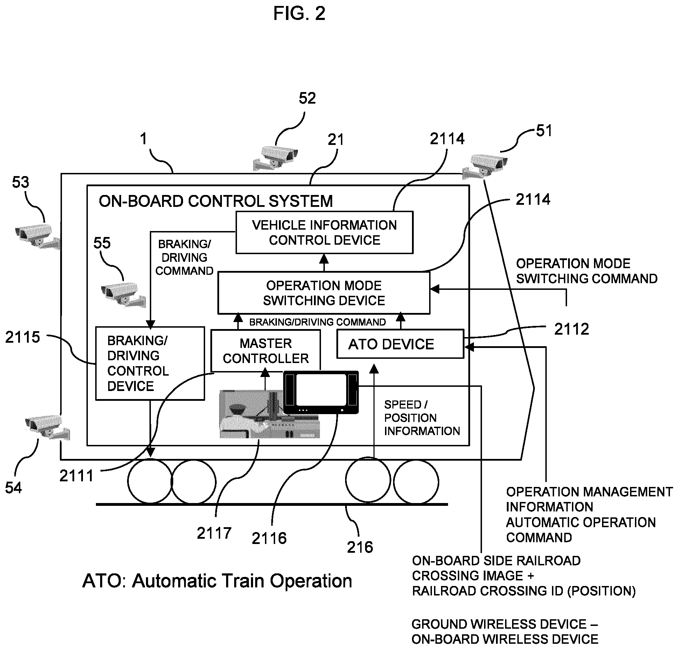

FIG. 2 is a block diagram illustrating a configuration example of the on-board control device 211 in the on-board device 2.

The on-board control device 211 is a device that transmits and receives a notch command, vehicle information, and the like to and from the braking/driving control device 2115 (brake control device) of the on-board device 2 to control the braking/driving control device 2115.

The on-board control device 211 includes a main controller (master controller) 2111, an ATO device 2112, an operation mode switching device 2113, a vehicle information control device 2114, and a braking/driving control device 2115.

The automatic train operation (ATO) operates in a state where a safety device (Automatic Train Control (ATC)) is provided. The ATO has a function of performing traveling from the departure to the stop of the train by adding functions such as departure control (control from the stop of the train at a platform to the departure after opening and closing of the door), regular operation control (control of performing acceleration/deceleration of a train and constant speed control, and then traveling to the next station in a predetermined time), and a home position stop control (control of automatically decelerate and stop the train at a predetermined position of a platform) based on the ATC device. For example, when the operator presses a start instruction button, the train automatically performs power running, constant speed or coasting, braking, and fixed point stop of the train.

The master controller 2111 and the ATO device 2112 output a braking/driving command (notch command or torque command) including a braking/driving force based on the speed signal and the position signal, and control the output/speed of the train 1 (vehicle) via the braking/driving control device 2115 based on the vehicle information (operation pattern, schedule information) of the train 1 in the vehicle information control device 2114.

In addition, the master controller 2111 is, for example, a switch device that manually performs powering, constant speed or coasting, braking, and stopping of the train 1 when the operator operates the start button.

The ATO device 2112 automatically performs powering, constant speed or coasting, braking, and stopping of the train 1 in response to an automatic operation command from the ATO central system 316 of the ground device 3.

The operation mode switching device 2113 is a device that switches the master controller 2111 and the ATO device 2112 in response to the operation mode switching command transmitted from the ground device 3, that is, switches the operation mode of the train 1 to the manual mode or the automatic mode.

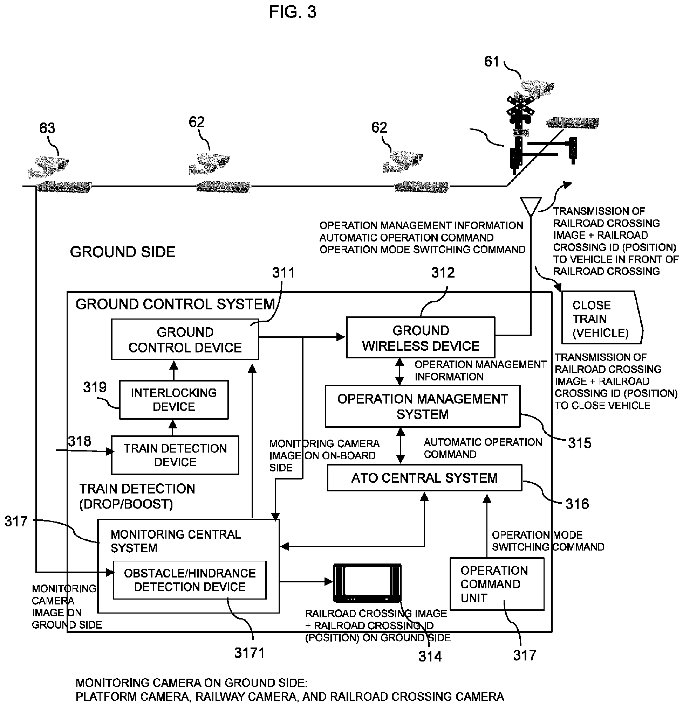

FIG. 3 is a block diagram illustrating a configuration example of the ground control system 31 in the ground device 3.

In addition to the ground control device 311 and the ground wireless device 312, the ground control system 31 includes a train -detection device 318, an interlocking device 319, an operation management system 315, an ATO central system 316, a monitoring central system 317, the monitoring device 314 described above, an operation command device 320 including an operation command unit, and the like.

When the train 1 approaches a preceding train (not illustrated), for example, the train detection device 318 outputs train detection information (drop/boost) indicating the position of each train.

The interlocking device 319 changes the point to a predetermined direction in response to the request for course setting, and when there is no other train (vehicle) on the course, the interlocking device displays a progress (green signal) meaning permission on the traffic light to guarantee the safety of train operation in the station, and outputs the train detection information detected by the train detection device 318 to the ground control device 311.

The ground control device 311 calculates a stop limit position based on information such as the train position and the stop limit position received by the ground wireless device 312 and the train detection of the interlocking device 319 and the travel section stored therein, and transmits the stop limit position to the on-board device 2 via the antenna 313 of the ground wireless device 312.

The ground wireless device 312 transmits and receives various types of information to and from the on-board device 2 via a wireless base station (not illustrated).

The operation management system 315 manages the operation of the train 1, and is a device that automatically controls a course via an interlocking device at each station in accordance with a planned operation schedule, includes a means for acquiring information on a presence position of the train, and issues a command such as changing an evacuation order at a station when operation is disrupted.

The ATO central system 316 is a device that operates in the presence of a safety device (ATC device) in response to a command from an operation command unit of the operation command device 320 by an operation of an operation commander, and issues a command of traveling from departure to stop of a so-called train 1, which commands functions such as departure control (control from the stop of the train at the platform to the departure after opening and closing of the door), regular operation control (control of performing acceleration/deceleration of a train and constant speed control, and then traveling to the next station in a predetermined time), and a home position stop control (control of automatically decelerate and stop the train at a predetermined position of a platform).

The monitoring central system 317 is a system including, for example, an obstacle/hindrance detection device 3171 that receives a camera image from a monitoring camera of the ground monitoring device 6 and sensor data from various device sensors 218, monitors the presence or absence of an obstacle (people, objects, cars, and the like) that obstructs traveling of the train or the presence or absence of the hindrance occurrence (device failure), and outputs the result to the monitoring device 314 and the ground wireless device 312, and a storage device 3172 that stores a camera video and the like.

The commander of the ground-side operation command station can determine the presence or absence of an obstacle/hindrance based on a camera video (a railroad crossing image and a railroad crossing position) and monitor data monitored by the monitoring device 314, and can command the ground side to issue an operation command (an operation mode, an operation mode change, or the like) according to the result.

The operation management system 315, the ATO central system 316, and the monitoring central system 317 are configured to operate in conjunction with each other. In addition, the monitoring device 314, the operation management system 315, the ATO central system 316, the monitoring central system 317, and the operation command device 320 constitute an operation command system in the operation command center.

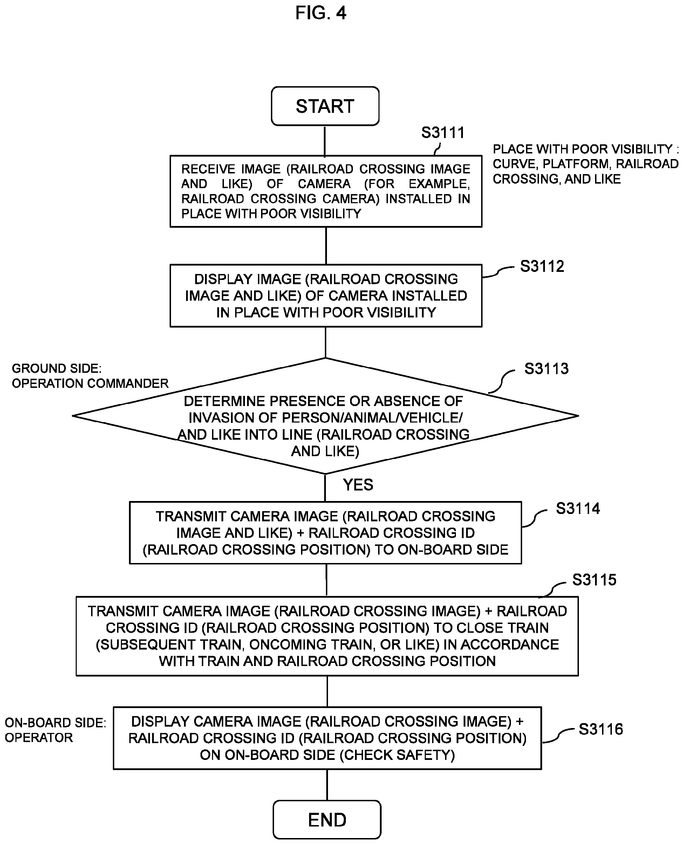

FIG. 4 is a flowchart for describing a processing procedure for notifying the on-board side of an obstruction occurrence situation including an obstruction occurrence detection result and an obstruction occurrence place when the obstruction occurrence is detected on the ground side in the train control system.

The operation based on the flowchart in FIG. 4 is as follows.

Step S3111:

The monitoring central system 317 receives a camera image captured by a monitoring camera installed in a blind place (railroad crossing) and monitors an obstacle and a hindrance.

Step S3112:
The monitoring device 314 displays a camera image (railroad crossing image).

Step S3113:
In the ground-side operation command system, for example, the operation commander checks a camera video (camera image) and an obstacle detection result of the train that has detected an obstacle (people, objects, cars, and the like) that obstructs traveling of the train 1 and the hindrance occurrence (device failure) based on the monitor screen of the monitoring device 314, and determines whether there is an obstacle or a hindrance.

Here, the presence or the absence of an obstacle or a hindrance may be automatically determined by the obstacle/hindrance detection device instead of the commander.

Step S3114:
When determining that there is an obstacle in the railroad crossing, the ATO central system 316 transmits a camera image (railroad crossing image) showing the railroad crossing with the obstacle and a railroad crossing position (railroad crossing ID) to the on-board device 2 on the vehicle side via the ground wireless device 312.

The camera image (railroad crossing image) and the railroad crossing position (railroad crossing ID) notify the on-board device of the ground field situation directly from a camera, a sensor, or the like installed on the ground side, or via the ground device. This notification is performed by a method of filtering the trains to be notified or a method of simultaneously notifying surrounding integrated trains based on the positions of the respective trains.

Here, when the ground field situation is notified to the on-board device via the ground device, the ATO central system 316 specifies the train 1 traveling in front of the railroad crossing based on the grasped information on the on-track position of the train and the information on the railroad crossing position, and transmits the camera image and the information on the railroad crossing position to the train 1. The information to be transmitted to the train may be a camera image (railroad crossing image) and a railroad crossing position (railroad crossing ID), but it is not always necessary to transmit the camera image as it is, and a determination result on the presence or the absence of an obstacle and information on the railroad crossing position may be transmitted.

Step S3115:
The ATO central system 316 transmits a camera image (railroad crossing image) showing a railroad crossing with an obstacle and a railroad crossing position (railroad crossing ID) via the ground wireless device 312 according to the train 1 (vehicle) and the railroad crossing position, that is, to another train 1' (vehicle) close to the obstruction occurrence place, for example, a following train or an oncoming train.

Here, an obstacle or an image itself captured by the monitoring camera while the train 1 is traveling may be transmitted to another train 1' via the ground device 3 or between trains without passing through the ground device, and may be notified.

Step S3116:
The monitoring device 2116 in the on-board device 2 on the on-board side displays the camera image (railroad crossing image) and the railroad crossing position (railroad crossing ID) transmitted from the ground device 3 on the ground side. Thus, the operator or the passenger can check the obstruction occurrence situation in the railroad crossing.

### [Embodiment 2]

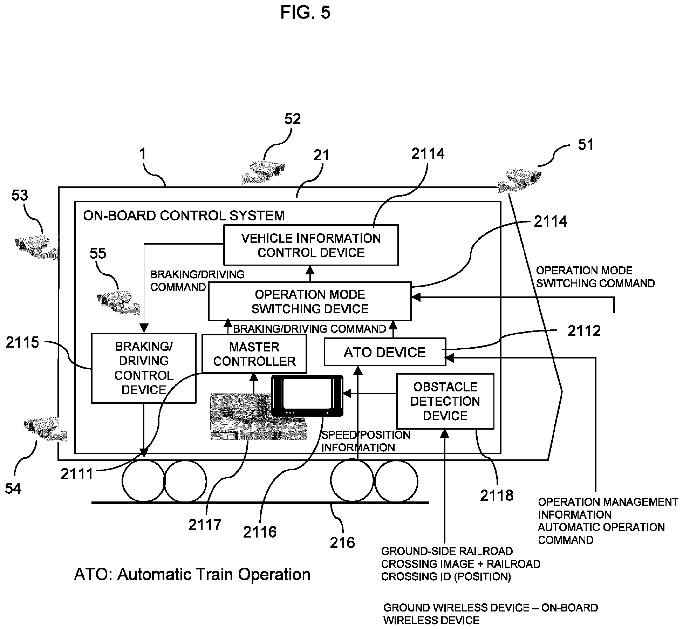

In the present embodiment, an obstacle is detected, displayed, and determined on the vehicle upper side, and the train 1 is controlled in response to the obstacle. Only the configuration and steps changed from Embodiment 1 will be described below with reference to FIGS. 5 to 7.

FIG. 5 is a block diagram illustrating a configuration example of an on-board control system in Embodiment 2. An on-board control system 21 further includes an obstacle detection device 2118.

The obstacle detection device 2118 receives a railroad crossing image and a railroad crossing ID (position) on the ground side, and outputs the image to the monitoring device 2116. The monitoring device 2116 displays and monitors a railroad crossing image and a railroad crossing ID (position) . Thus, it is possible to detect an obstacle on the vehicle side.

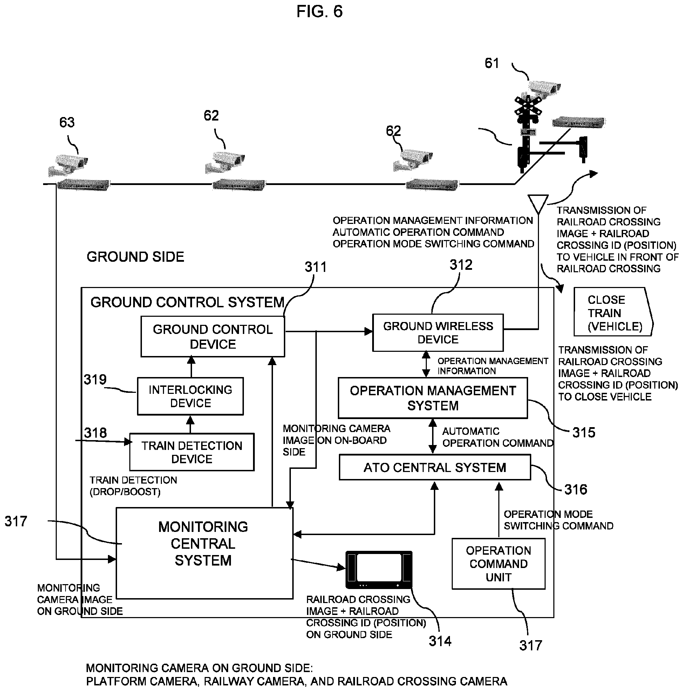

FIG. 6 is a block diagram illustrating a configuration example of a ground control system in the ground device in Embodiment 2. When an obstacle is detected on the vehicle upper side, the monitoring central system 317 can omit the obstacle/hindrance detection device 3171.

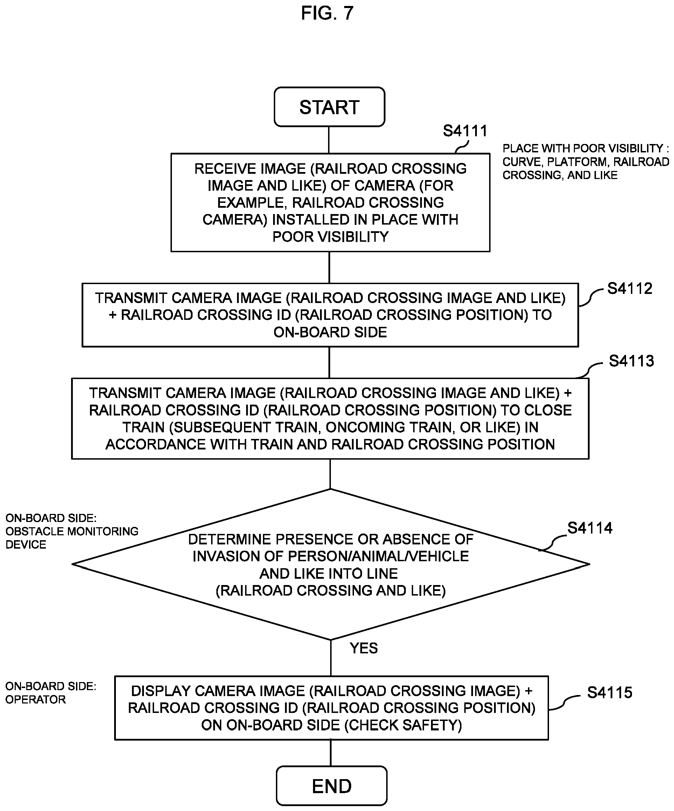

FIG. 7 is a flowchart for explaining a processing procedure of detecting and displaying an occurrence of an obstruction on the on-board side in the train control system in Embodiment 2.

Step S4111:
The obstacle detection device 2118 of the on-board control system 21 receives a camera image captured by a monitoring camera installed at a place (railroad crossing) with poor visibility, and monitors an obstacle and a hindrance.

Step S4112:
When the obstacle detection device 2118 determines that there is an obstacle in the railroad crossing, the on-board control system 21 transmits a camera image (railroad crossing image) showing the railroad crossing with the obstacle and a railroad crossing position (railroad crossing ID) to the ground device 3 on the ground side via the on-board wireless device 212.

Step S4113:
The on-board control system 21 transmits, via the on-board wireless device 212, a camera image (railroad crossing image) showing a railroad crossing with an obstacle and a railroad crossing position (railroad crossing ID) according to the train 1 (vehicle) and the railroad crossing position, that is, also to another train 1' (vehicle) close to the obstruction occurrence place, for example, a following train or an oncoming train.

Step S4114:
In the obstacle detection device 2118 of the on-board control system 21, for example, the operation commander checks a camera video (camera image) and a hindrance detection result of the train that has detected an obstacle (people, objects, cars, and the like) that obstructs traveling of the train 1 or a hindrance occurrence (device failure) based on the monitor screen of the monitoring device 314, and determines whether there is an obstacle or a hindrance. Here, the presence or the absence of an obstacle or a hindrance may be automatically determined by the obstacle/hindrance detection device instead of the commander.

Step S4115:
The monitoring device 2116 in the on-board control system 21 on the on-board side displays the camera image (railroad crossing image) and the railroad crossing position (railroad crossing ID) received by the obstacle detection device 2118. Thus, the operator or the passenger can check the obstruction occurrence situation in the railroad crossing.

In the present embodiment described above, the presence or absence of the obstacle/hindrance is determined by the operation commander in the ground-side operation command system. However, for example, in the monitoring central system 317, the determination may be automatically performed using an image recognition technology or an artificial intelligence (AI) technology. In this case, the operation commander becomes unnecessary.

Note that, the present invention is not limited to the above-described embodiment, and various modifications may be provided. For example, the above embodiments are described in detail in order to explain the present invention in an easy-to-understand manner, and the above examples are not necessarily limited to a case including all the described configurations.

### Reference Signs List

1 train (vehicle)
2 on-board device
21 on-board control system
211 on-board control device
212 on-board wireless device
2111 master controller
2112 ATO device
2113 operation mode switching device
2114 vehicle information control device
2115 braking/driving control device
3 ground device
31 ground control system
311 ground control device
312 ground wireless device
314 monitoring device
315 operation management system 316 ATO central system
317 monitoring central system
3171 obstacle/hindrance detection device
318 train detection device
319 interlocking device
320 operation command device
5 on-board monitoring device
6 ground monitoring device

## Claims

1. A train control system comprising:
a monitoring camera that is installed on a ground and/or on a vehicle and captures an image around a track on which a train travels or on a railway; a ground device; and an on-board device, wherein
the ground device includes
an obstacle detection device that collects a camera video captured by the monitoring camera and detects presence or absence of an obstacle/hindrance based on the collected camera video, and
a ground wireless device that, when the obstacle detection device detects the obstacle/hindrance, transmits at least any information of the camera video of the monitoring camera that detects the obstacle/hindrance and an obstacle/hindrance detection result, and position information indicating an obstruction/hindrance occurrence place, to the on-board device,
the on-board device includes
an on-board wireless device that receives at least the any information of the camera video and the obstacle/hindrance detection result, and the position information indicating the obstruction/hindrance occurrence place, which are transmitted from the ground wireless device of the ground device, and
a monitoring device that displays at least the any information of the camera video and the obstacle/hindrance detection result, and the position information indicating the obstruction/hindrance occurrence place, which are received by the on-board wireless device, and
the monitoring device is enabled to check a field situation before the train approaches the obstruction/hindrance occurrence place.

2. The train control system according to claim 1, wherein the monitoring camera includes
one or more of a railway camera that captures an image of a track railway, a railroad crossing camera that captures an image of an inside of a railroad crossing, and a home camera that captures an image of a platform, the railway camera, the railroad crossing camera, and the home camera being installed on a ground, and/or
one or more of a front camera that captures an image of a front of the train traveling on the track, a rear camera that captures an image of a rear of the train, a side camera that captures an image of a periphery and a side of the train, a pantograph camera that captures an image of a pantograph, and an in-vehicle camera that captures an image of a door of the train or an inside of the vehicle, the front camera, the rear camera, the side camera, the pantograph camera, and the in-vehicle camera being installed on the vehicle.

3. The train control system according to claim 1 or 2, wherein
an obstacle or an image itself captured by the monitoring camera during traveling of the train is transmitted to another train via the ground device or between trains without passing through the ground device,
so as to be notified.

4. A train control system comprising:
a monitoring camera that is installed on a ground and/or on a vehicle and captures an image around a track on which a train travels or on a railway; a ground device; and an on-board device, wherein
the ground device includes a ground wireless device that transmits, to the on-board device, a camera video captured by a monitoring camera and position information indicating a place of the monitoring camera,
the on-board device includes
an on-board wireless device that receives the camera video transmitted from the ground wireless device of the ground device and the position information of the monitoring camera that detects an obstacle,
an obstacle detection device that detects presence or absence of the obstacle based on the camera video transmitted from the ground wireless device of the ground device, and
a monitoring device that, when the obstacle detection device detects the obstacle, displays at least any information of the camera video used to detect the obstacle and an obstacle detection result, and the position information indicating the place of the monitoring camera, which is transmitted from the ground wireless device, and
the monitoring device is enabled to check a field situation before the train approaches an obstruction/hindrance occurrence place.

5. The train control system according to claim 1 or 4, wherein,
when there is another train close to the train in accordance with the train and the position information,
the ground device further transmits a monitoring camera video and the position information to an on-board device of the close other train to call attention to a following train and an oncoming train.

6. The train control system according to claim 1 or 5, wherein
the ground device further includes a monitoring device that displays the camera video captured by the monitoring camera, and
the monitoring device is enabled to check a field situation before the train approaches an obstruction/hindrance occurrence place.

7. The train control system according to any one of claims 1 to 6, wherein the monitoring camera includes one or more of a railway camera, a railroad crossing camera, and a home camera.

8. A train control system comprising:
a monitoring camera that is installed on a ground, captures an image of an obstacle that obstructs or hinders traveling of a train, and outputs a camera video;
a ground device that includes a monitoring device that receives and displays the camera video captured by the monitoring camera and position information indicating an obstruction occurrence place; and
an on-board device that includes a monitoring device that receives and displays the camera video transmitted from the ground device and the position information indicating the obstruction occurrence place,
wherein, when an obstacle/hindrance that may obstruct/hinder traveling of the train is detected based on the camera video captured by the monitoring camera, the ground device transmits the camera video and information indicating a position indicating an obstruction occurrence place, to an on-board device of a train close to the obstruction occurrence place,
the on-board device causes the camera video and position information indicating the obstruction occurrence place, which are transmitted from the ground device, to be displayed on the monitoring device, and
the monitoring device is enabled to check a field situation before the train approaches an obstruction/hindrance occurrence place.

9. The train control system according to claim 8, wherein the monitoring camera includes
one or more of a railway camera, a railroad crossing camera, and a home camera.

10. The train control system according to claim 8, wherein
the monitoring camera is installed on the ground, captures an image of a place that cannot be seen from an operator seat, and outputs a camera video obtained by capturing an image of the place that cannot be seen from an operator seat and information indicating a position indicating an obstruction occurrence place,
the ground device includes
the monitoring device that receives and displays the camera video captured by the monitoring camera and the position information indicating the obstruction occurrence place,
an obstacle detection device that has a function of determining presence or absence of an obstacle from the camera video, and
a ground wireless device that transmits the camera video of the monitoring camera and the information indicating the position to an on-board wireless device,
the on-board device includes
an on-board monitor device that displays the camera video of the monitoring camera and the information indicating the position, which are received by the on-board wireless device, and
the on-board wireless device that receives the camera video of the monitoring camera and the information indicating the position, which are transmitted from the ground device,
when the obstacle detection device detects an obstacle, the ground device transmits the camera video of the monitoring camera that detects the obstacle and the information indicating the position, to a train present at a place close to the obstacle via the ground wireless device,
the on-board device displays the camera video of the monitoring camera that detects the obstacle and the information indicating the position, which are transmitted from the ground device, and
the monitoring device is enabled to check a field situation before the train approaches an obstruction/hindrance occurrence place.

11. The train control system according to claim 10, wherein
the place that cannot be seen from the operator seat is any one or more of a curve, a railroad crossing, and a vicinity of a door, and
the monitoring camera is any one or more of a railway camera, a railroad crossing camera, and a home camera.
